# EUROPEAN PATENT SPECIFICATION

(11) **EP 2 904 042 B1**
(45) Date of publication and mention of the grant of the patent: **17.05.2017**
(21) Application number: 13776954.3
(22) Date of filing: 02.10.2013
(51) Int. Cl.: C08G 18/72, C08G 18/32, C08J 9/02, C08J 9/08

(54) **"COMPOSITION BASED ON VEGETABLE TANNINS, FREE FROM FORMALDEHYDE AND LOW-BOILING ORGANIC SOLVENTS, FOR MANUFACTURING A FOAM MATERIAL, AND PROCESS THEREOF"**
ZUSAMMENSETZUNG AUF DER BASIS VON PFLANZENTANNINEN, FREI VON FORMALDEHYD UND TIEFSIEDENDEN ORGANISCHEN LÖSUNGSMITTELN, ZUR HERSTELLUNG EINES SCHAUMMATERIALS UND VERFAHREN DAFÜR
COMPOSITION À BASE DE TANINS VÉGÉTAUX, EXEMPTE DE FORMALDÉHYDE ET DE SOLVANTS ORGANIQUES DE POINT D'ÉBULLITION BAS, POUR LA FABRICATION D'UN MATÉRIAU MOUSSÉ, ET PROCÉDÉ ASSOCIÉ

(30) Priority: 02.10.2012 IT TO20120860
(43) Date of publication of application: 12.08.2015
(73) Proprietor: Silvachimica S.r.l., 12080 San Michele Mondovì (IT); Université de Lorraine, 54052 Nancy Cedex (FR)
(72) Inventor: PIZZI, Antonio, F-88000 Chantraine (FR); BASSO, Maria, Cecilia, F-88000 Epinal (FR); GIOVANDO, Samuele, I-12065 Monforte d'Alba (CN) (IT); CELZARD, Alain, F-88000 Epinal (FR)
(74) Representative: Cian, Paolo
(86) International application number: PCT/EP2013/002954
(87) International publication number: WO 2014/053239

(56) References cited:
- LI X ET AL: "Tailoring the structure of cellular vitreous carbon foams", CARBON, ELSEVIER, OXFORD, GB, vol. 50, no. 5, 3 January 2012 (2012-01-03), pages 2026-2036, XP028414351, ISSN: 0008-6223, DOI: 10.1016/J.CARBON.2012.01.004 [retrieved on 2012-01-11]
- N.E.MEIKLEHAM, A.PIZZI: "Acid- and Alkali-Catalyzed Tannin-Based Rigid Foams", JOURNAL OF APPLIED POLYMER SCIENCE, vol. 53, 31 March 1994 (1994-03-31), pages 1547-1556, XP002698160,
- TROSA ET AL: "INDUSTRIAL HARDBOARD AND OTHER PANELS BINDER FROM TANNIN/FURFURYL ALCOHOL IN ABSENCE OF FORMALDEHYDE", HOLZ ALS ROH- UND WERKSTOFF, SPRINGER-VERLAG. BERLIN, DE, vol. 56, no. 3, 1 January 1998 (1998-01-01), pages 213-214, XP008078348, ISSN: 0018-3768, DOI: 10.1007/S001070050301
- G.TONDI, A.PIZZI: "Tannin-based rigid foams:Characterization and modification", INDUSTRIAL CROPS AND PRODUCTS, vol. 29, 8 July 2008 (2008-07-08), pages 356-363, XP002698161,

## Description

The present invention relates in general to expanded, foamed or alveolar materials, also called foams, having a solid structure.
These materials are widely used in a variety of applications, such as in the transportation and packaging fields, typically to protect items and goods, in the building, automotive, nautical or aeronautical fields as construction and insulation materials.
Foam materials to be employed for the uses mentioned above are known, such as polyurethane or phenolic foams. Phenolic foams are very versatile materials the properties of which can be modulated to change at will the features of greater or lesser insulation, water absorption, low density, etc. Moreover, phenolic foams have usually a remarkable fire resistance, and have a relatively low cost, which makes their application convenient in many fields.
Polyurethane or polystyrene foam, although very little fire resistant, are widely used for similar purposes, above all for their thermal insulation properties.
In any case, these known materials, by virtue of their morphology, are able to dissipate mechanical energy as a result of deformation or breaking of their structure, and are therefore suitable for application in the packaging industry, as well as for use as materials for protection against impacts.
In compositions used for manufacturing phenolic or polyurethane foams, low-boiling organic solvents are often used, that is solvents having a low-boiling point (in the range between 30 and 80°C), which solvents evaporate owing to the heat that can be provided from outside in order to reach the energy necessary for activating the reaction of polymerization, or drawn from the exothermicity of the reaction itself. Evaporation of these low-boiling solvents gives rise to formation of the cellular structure of the foam. The solvents commonly used may, for example, consist of the following substances in pure form or mixture: ethylether, pentane or isopentane. Many of these solvents are considered to be hazardous as they are highly flammable, and it would be convenient to eliminate them in order to remove a danger factor of the relevant process.
As an alternative to the technology employing low-boiling solvents, foam materials obtained from phenolic resins are described in the literature, which make use of substances that can be decomposed as a result of heat or because of the acid environment of the reaction.
The present invention relates to a composition based on vegetable tannins, therefore based on substances of natural origin, for manufacturing a foam material. Expanded or foam materials deriving from natural products are already known, such as vegetable tannin (flavonoids) based foams, which consist of small polyphenolic, mainly water-soluble, molecules extracted from various plant species. These tannin based foam materials can replace phenol-formaldehyde foams in most applications, because they have similar properties and performances.

These foams of natural origin have also the advantage of being environmental-friendly, since the vegetable tannins combine high reactivity and low cost with a character of renewability.

The rigid vegetable tannin based foams known so far are prepared for example by means of a technology that includes use of a composition of condensed tannins, furfuryl alcohol, formaldehyde and diethyl-ether in an aqueous medium, and hardening thereof is obtained by adding an acid catalyst, such as para-toluen-sulfonic acid (p- TSA).

Addition of p-TSA gives rise to various reactions between the components of the composition such as selfcondensation of the furfuryl alcohol, condensation of furfuryl alcohol with flavonoids, and condensation of flavonoids having already reacted with formaldehyde. These reactions, all of which are exothermic, occur simultaneously and cause boiling of diethyl-ether that, evaporating, originates expansion of the foam simultaneously with occurrence of cross-linking process (G. Tondi et A. Pizzi, Industrial Crops and Products, 29, 2009, 356-363).

However, this known composition and its process for obtaining solid foams, involve the presence of two aspects that can be a source of problems.

On the one hand, use of formaldehyde as a cross-linking agent is considered critical because its harmful effects on human health are known, insomuch as it is classified as a suspected carcinogenic agent by the EU and as a carcerogeneous agent by IARC (International Agency for Research on Cancer, that is an authority of OMS - World Health Organization). Moreover, the presence of residues of formaldehyde in the foam material are particularly unwelcome in the case in which it is used as an insulating material, taking into account that national and international regulations on construction materials tend to be more restrictive in respect of the presence and emissions of formaldehyde.

Use of diethyl-ether as an foaming agent, which is a highly volatile and combustible solvent, constitutes a further problem.

In particular, the invention relates to a composition for manufacturing a foam material, or foam, based on vegetable tannins, of the type defined in the preamble of claim 1.

Such a composition, which is known from Italian patent application T02011A000656 in the name of the same Applicants, can be used in a process for obtaining a solid foam based on flavonoid tannins. This known composition consists of a mixture of tannins with furfuryl alcohol, a foaming agent consisting of a highly volatile organic solvent, and a catalyst, and it is completely free from formaldehyde or other aldehydes, so that no emission of these substances from the finished product can occur. The composition and the relevant process, however, needs the use of compounds such as pentane, hexane and/or isomers thereof, ethers such as diethyl-ether derived from petroleum, which are solvents having a low-boiling point (30-60°C) that become volatile during the exothermic reactions of polymerization, causing therefore formation of the foam. These compounds can cause harmful effects on the health of the operators and the environment.

In view of the drawbacks of the prior art mentioned above, the invention aims to propose a new tannin based composition, not involving the use of formaldehyde or low-boiling organic solvents, and allowing to obtain a low cost alveolar or foamy material having high performances and ecological properties, to be used for many applications.

This object is achieved, according to the invention, by a composition as defined by claims 1 to 10.

By virtue of the fact that the composition of the invention contains an amount of water not greater than 15% by weight of the composition, and of the fact that it includes a substance adapted to release a gas having the function of a foaming agent, which substance is used according to a amount not greater than 10% by weight of the composition, the composition being totally free from formaldehyde and low-boiling organic solvents, it is possible to obtain a solid, insoluble and non-meltable foam material, deriving from natural resources. Since the composition and the foam material obtainable from it completely lack both in formaldehyde and organic solvents with low-boiling point, they do not involve the drawbacks of the known prior art.

According to a preferred feature of the invention, the substance adapted to release a gas having the function of a foaming agent is an isocyanate, which is used according to an amount smaller than 1% in weight of the composition.

By virtue of this feature, the isocyanate reacts with water contained in the composition and with tannin, releasing carbon dioxide (CO₂) that constitutes the foaming agent, and also promotes obtaining of a foam with high mechanical strength properties.

The invention also relates to a foam material obtainable from the above composition, as defined by claim 11.

In particular, the foam material of the invention is lightweight, inexpensive, easy to be manufactured, provided with characteristics of good mechanical strength, high fire resistance and low thermal conductivity. In particular, the foam material according to the invention has the characteristics required for application thereof in different industrial fields, in transportation and buildings.

A further subject of the invention is a process for manufacturing a vegetable tannin based foam material, starting from the above composition.

Further characteristics and advantages of the invention will become clearer from the following detailed description, given by way of non-limitative example and referred to the accompanying figures in which:
- Figure 1 is a diagram representing curves of the values of resistance to compressive stress obtained experimentally for two samples of foam materials according to the prior art (STD and SF), and of a sample of foam material according to the invention (M1),
- Figure 2 is a diagram representing curves of the values obtained experimentally for evolution of temperature over time, during the preparation of the foam materials STD, SF and M1,
- Figure 3 is a diagram representing curves of the values obtained experimentally for evolution of pressure over time, during the preparation of the foams STD, SF and M1,
- Figure 4 is a diagram representing the characteristic curves of the values obtained experimentally for the expansion speed and for the dielectric polarization as a function of the time, during the preparation of the foam material STD,
- Figure 5 is a diagram representing the characteristic curves of the values obtained experimentally for the expansion speed and for the dielectric polarization as a function of the time, during the preparation of the foam material SF, and
- Figure 6 is a diagram that representing the characteristic curves of the values obtained experimentally for the expansion speed and for the dielectric polarization as a function of the time, during the preparation of the foam material M1.

A foam material according to the present invention is prepared from condensed poli-flavonoid tannins, furfuryl alcohol, water, a catalyst, a substance adapted to release a gas having the function of a foaming agent, conveniently an isocyanate in small amounts, and optionally one or more additives.

Condensed poli-flavonoid tannins, such as tannins extracted from Mimosa (Acacia mearnsii, Acacia mollissima, Acacia mangium) bark, from Quebracho (Schinopsis lorenzii, Schinopsis balansae) wood, from pine (Pinus pinaster) bark, from Spruce (Picea abies) bark, from Pecan (Carya illinoensis) bark, as well as from Catechu (Acacia catechu) wood and bark, are used as vegetable tannins.

The tannins are employed in the form of powder, according to an amount in the range between 40 and 50% by weight of the composition.

Furfuryl alcohol is a product of natural origin obtained by catalytic reduction with hydrogen of furfural, which is obtained by acid hydrolysis of sugars and waste from agricultural processes. The furfuryl alcohol is used in the inventive composition according to an amount such as to allow a foam material totally free from formaldehyde to be produced. In particular, an amount of furfuryl alcohol greater than 15% by weight of the composition is used.

The composition includes also a substance adapted to release a gas having the function of a foaming agent, typically used in a relatively small amount, and in any case not greater than 10% by weight of the composition. Preferably, this substance consists of an isocyanate. As an alternative, it could be at least partially replaced by other substances that are able to release a gas as a result of the reaction temperature or the acidity required to catalyze the reaction, such as ammonium nitrite or sodium bicarbonate, as known from the literature referring to other foam materials.

In the preferred case in which isocyanate is employed, it is used in the form of monomeric, polymeric or modified isocyanate, for example methylene-diphenyldiisocyanate (MDI) or polymeric diphenylmethane-diisocyanate (PMDI), or a combination thereof, according to an amount usually less than 1% by weight of the composition.

Use of isocyanate in small doses involves various effects on formation of the foam material and on the characteristics of the product so obtained. Firstly, it allows carbon dioxide (CO₂) to be released during the polymerization step of the foam material, which acts as a foaming agent as a result of reaction thereof with water and with tannin of the composition, and therefore makes it possible to avoid use of low-boiling solvents.

Furthermore, the isocyanate increases the ability of the reaction to release heat, or to be exothermic, which optimize the polymerization step.

By virtue of the presence of the isocyanate, the mechanical properties of the foam material so obtained are improved. In fact, the isocyanate reacts with groups -CH₂OH and =CHOH formed in the tannins by reaction with furfuryl alcohol, and with residual groups -CH₂OH of furfuryl alcohol and oligomers thereof, so that the urethane groups that are formed during constitution of the foam resin are more elastic, which allows a better distribution of mechanical tensions to be obtained in the volume of the polymeric foam material so obtained.

An acid is used as a catalyst, in order to trigger chemical reactions of polycondensation. The acid may be, for example, para-toluenesulfonic acid (p-TSA), phosphoric acid or trichloroacetic acid. Conveniently, the catalyst is an aqueous solution of p-TSA at 65% by weight, used according to an amount less than 20% by weight of the composition. As an alternative or in addition to water, the catalyst can be dissolved in glycerol or other alcohols or poly-alcohols.

Water is added to the composition according to a proportion up to 15% by weight of the composition, in addition to small percentages of water already present in the tannin and other reagents.

The composition so defined, that, as said above, mainly comprises tannins, furfuryl alcohol, water, a catalyst and small amounts of a substance adapted to release a gas having the function of a foaming agent, conveniently an isocyanate, allows a solid foam to be obtained, deriving for about 90% from available and renewable natural resources, unlike what happens in the foam materials commonly used in products that are widely derived from petrochemical industry, having therefore a synthetic origin.

One or more additives can be added to the composition, according to a proportion variable up to 10% by weight.

These additives may include, by way of non-limiting example:
- emulsifying agents, dispersants, surfactants, for example ethoxylated castor oil, polyethylene glycols, in order to improve homogeneity of the composition, which act as stabilizers during the process of formation of the foam material, also improving its wettability in water;
- plasticizing agents, in order to decrease friability of the foam material obtained;
- agents for increasing fire resistance and for reducing self-extinguishing time, such as boric acid, phosphoric acid, or mixtures and derivatives thereof;
- nanoparticles having the function of filler to increase mechanical strength of the foam material,
or any combination thereof.

Moreover, other polymerization agents (curing agents), such as, for example, glyoxal, examine, acetaldehyde, propionaldehyde, butyraldehyde, furaldehyde, may be used.

Typically, the gas released during reaction, which constitutes the foaming agent, is carbon dioxide generated by reaction of isocyanate with water and with tannin contained in the composition, so that no use of highly volatile compounds is required as foaming agents, which were instead necessary in the prior art foam materials.

The process for preparing the foam material comprises, by way of example, the initial preparation of a homogenized mixture that, as described in greater detail in the following example, includes tannins, furfuryl alcohol, water and possible additives. Subsequently, the substance adapted to release a gas having the function of a foaming agent, for example an isocyanate, is added to the mixture, and a new homogenization step is performed, after that the catalyst is added to the mixture so obtained.

The process can be automated so as to control dosing of the individual components of the composition, as well as times and temperatures of the various steps.

The invention is described in greater detail with reference to the following example, referring to a composition and a process adapted to obtain a tannin based foam material.

### Example 1

Compositions of some tannin based foam materials are shown in the following Table 1, in order to allow a comparison thereof. In particular, foam materials called STD and SF were obtained from a traditional composition and by a traditional process both employing highly volatile solvents, while the foam materials called M1, M2 and M3 were obtained from compositions and by a process according to the invention. For the purposes of the example, para-toluen-sulfonic acid (p-TSA) was used as a catalyst in the various compositions, according to a fixed amount of an aqueous solution, typically 65% by weight, although also other acid catalysts referred to above may be used, and all the materials obtained include the same amount of tannin and water.

While the foam materials M1, M2 and M3 are completely free from formaldehyde and volatile solvents, both STD and SF materials include diethyl-ether, and only STD material includes both diethyl-ether and formaldehyde.

**Table 1 - Composition of tannin based foam materials**

| ***Formulation*** | **STD** | **SF** | **M1** | **M2** | **M3** |
|---|---|---|---|---|---|
| Tannin (g) | 30 | 30 | 30 | 30 | 30 |
| p-TSA (65%) (g) | 11 | 11 | 11 | 11 | 11 |
| Furfuryl alcohol (g) | 10.5 | 21 | 21 | 21 | 21 |
| Formaldehyde (g) | 7.4 | - | - | - | - |
| Diethyl-ether (g) | 3 | 3 | - | - | - |
| Water (g) | 6 | 6 | 6 | 6 | 6 |
| pMDI (g) | - | - | 0.4 | 0.4 | 0.4 |
| PEG400 (g) | - | - | - | 0.6 | - |
| Propylene glycol methyl ether | - | - | - | - | 0.6 |

The materials M1, M2 and M3 are obtained according to the process described below.

The dosed amount of tannin is added gradually, under mechanical stirring, to a mixture of furfuryl alcohol, water and possible additives. After, the mixture is been stirred vigorously until its complete homogeneity has been reached, which remains then stable over time under various environmental conditions, so that it can be transported as intermediate. Then, isocyanate is added to this mixture, at the time of use, and it is stirred again until it reaches the complete homogeneity. Then, the catalyst p-TSA is added, and stirring is maintained for a time necessary to homogenize it with the mass, after that the mixture so obtained is transferred into a container having the function of a mold, in order to obtain a desired shape of the foam material.

After an induction time that, at room-temperature lasts about 110-120 seconds, depending on the composition used, expansion of the composition begins.

A similar process was used while preparing the foams SF and STD, in which diethyl-ether was added immediately before the catalyst. In the case of STD formulation, formaldehyde was added together with furfuryl alcohol.

### Analysis of samples of the obtained materials

The foam materials so obtained were cut into pieces of known size, in order to obtain samples that are suitable to be investigated and compared, as well as to determine their apparent density.

From examination of the samples so obtained, it can be noticed that all of them have a structure having a uniform appearance, free from visible defects. Addition of small amounts of PEG400 or other glycol ethers as emulsifiers or dispersants, improves mixing of the components of the composition of the invention, since it reduces viscosity thereof (M2 and M3 materials). Proportions of the remaining reagents is finely adjusted so as to obtain a balanced composition.

Thermal conductivity of the samples was determined at room-temperature by the transient process called Transient Plane Source (TPS, Hot Disk TPS 2500). Resistance to compressive stress was evaluated by a universal evaluation tool INSTRON 5944, by applying a translation or displacement speed of 2 mm/min.

Evolution of the physical parameters during formation of the foams has been studied by preparing the same compositions of Table 1 in a FOAMAT system model 281, in order to evaluate simultaneously the expansion speed, the speed of polymerization, the pressure, and the temperature, throughout the process.

### Experimental results

The results obtained from the foam material samples having the compositions shown in Table 1, are reported in the following Table 2.

**Table 2 - Characterization of samples STD, SF, M1, M2 and M3**

| | **STD** | **SF** | **M1** | **M2** | **M3** |
|---|---|---|---|---|---|
| Apparent density (g/cm³) | 0.062 | 0.055 | 0.070 | 0.075 | 0.068 |
| Thermal conductivity (W/mK) | 0.049 | 0.043 | 0.044 | 0.044 | 0.042 |

All the foams obtained are light, since their apparent density is less than 1 g/cm³. The compositions M1, M2, M3 according to the invention have a thermal conductivity similar to that of the foam SF (without formaldehyde, and including diethyl-ether), and lower than that found for the sample STD (with formaldehyde and diethyl-ether).

Therefore, it can be concluded that the new compositions according to the invention, which are free from formaldehyde and low-boiling foaming agents, allow a material with good thermal insulation properties to be obtained.

In the following, some remarks on the characteristics of the sample M1 only are reported, the samples M2 and M3 being very similar to it.

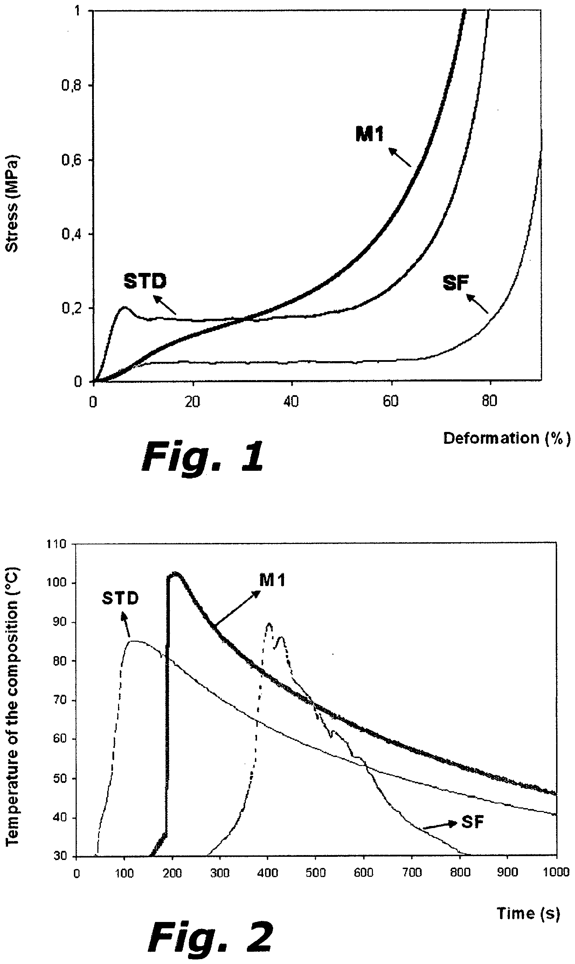

The characteristics obtained from compression tests performed on the samples of foams STD, SF and M1, are represented in Figure 1.

The material STD (with formaldehyde and diethyl-ether) is brittle and rigid, while the foams SF and M1 (without formaldehyde) have a significantly lower modulus of elasticity and therefore are more elastic, and do not break easily. In fact, it is known that formaldehyde tends to immobilize tannin molecules while cross-linking reactions occur, which results in an incomplete curing and formation of a fragile polymeric lattice. Therefore, the absence of formaldehyde allows much more flexible polymeric chains to be obtained.

By comparing the curves of resistance to compressive stress of Figure 1, it can be noticed that the foam M1 (without formaldehyde and without ether) is more elastic and resistant than the foam SF (without formaldehyde and with diethyl-ether), which represents a significant improvement compared to tannin foams free from formaldehyde currently known. The behavior of the foam M1 when subjected to compression, derives from reaction of isocyanate added to the composition of the invention with groups **-**CH₂OH of the furfuryl alcohol and with those generated by the tannin. Urethanes formed as a result of the reaction, improve the mechanical properties of the foam, which is more elastic, and allow a better distribution of mechanical stresses in the foam material.

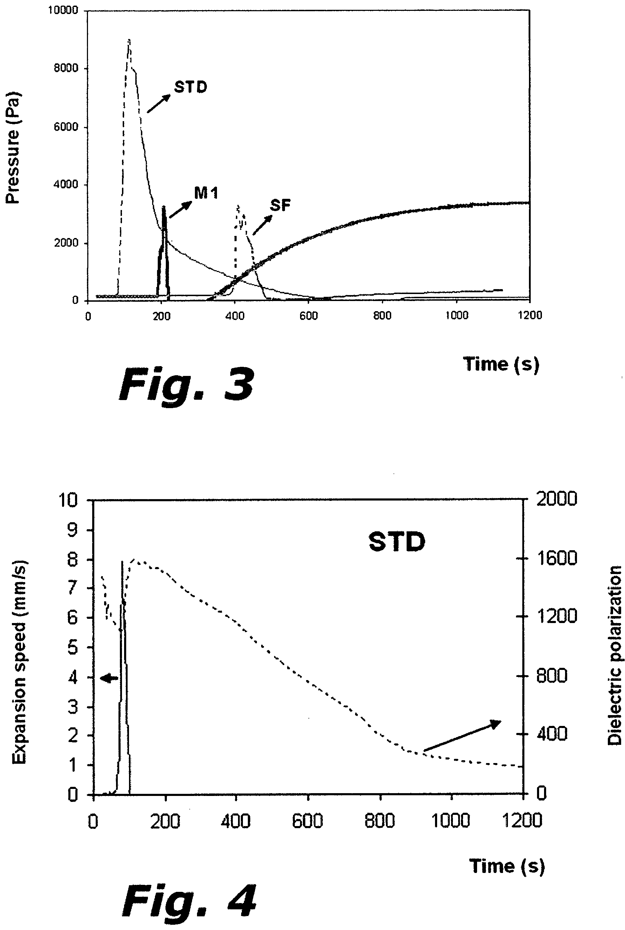

Figures 2 and 3 show, respectively, the temperature and pressure curves measured during formation of the foams STD, SF and M1, while Figures 4 to 6 show the expansion speed and dielectric polarization measured for the samples STD, SF and M1, respectively.

In general, curves of Figures 2 to 6 highlight how physical parameters of the foam M1 of the invention evolve differently from those of the known foams STD and SF containing formaldehyde and/or volatile solvents.

It fact, it can be noticed (figure 2) that the maximum temperature (102°C) reached by the composition M1 according to the invention, is higher than the maximum temperature obtained for the compositions SF and STD (less than 90°C). This results from use of isocyanate in the sample M1, by virtue of which the exothermic reaction allows temperature of the system to be increased, which optimizes cross-linking process. Furthermore, as already said, use of isocyanate allows the CO₂ necessary to formation of the foam material to be produced.

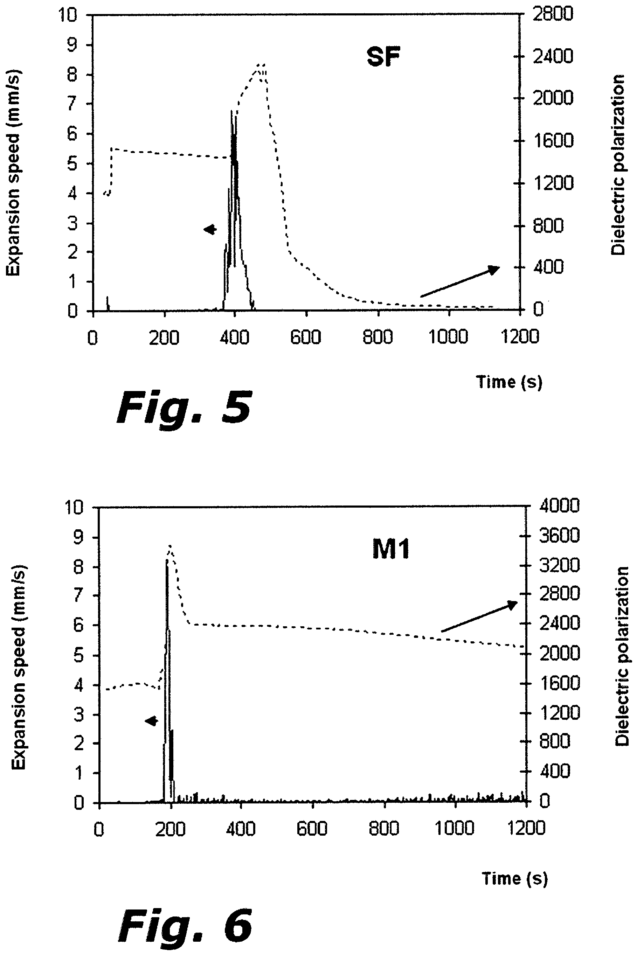

In the case of the composition M1 of the invention, a pressure peak is obtained, at about 190 seconds (Figure 3), which is significantly smaller than that observed for the sample STD (at about 80 seconds). Use of formaldehyde and volatile solvents in the sample STD involves a considerable increasing of pressure, which originates a more fragile structure. Rising of pressure in the composition SF is similar to that occurring for the composition of the material M1. The composition M1, which is free from low-boiling solvents, shows a gradual increasing of pressure starting from about 340 seconds, which corresponds to the polymerization step of the foam (see also the profile of the dielectric polarization of Figure 6). Progressive increasing of pressure of the composition of the sample M1, derives from the presence of CO₂ that is released during reaction of isocyanate with water of the composition while curing occurs, and which allows a greater porosity in the material to be developed, without entailing neither a break nor a collapse of the structure thereof.

The profiles of the expansion speed (calculated as a function of increasing of the height of the foam) and of the dielectric polarization, measured during preparation of samples STD, SF and M1, respectively, are shown in figures 4, 5 and 6. The amount of dielectric polarization provides an information on the state of polymerization of the relevant composition. This parameter decreases drastically when curing begins, and progresses up to the state of immobilization of molecules.

In the case of the samples STD and SF, cross-linking takes place more slowly than expansion, while for the composition M1 the two processes take place practically simultaneously. This constitutes an advantageous aspect from the point of view of the mechanical properties of the material obtained by the process.

In conclusion, the composition and the process for manufacturing tannin based foam or alveolar materials according to the present invention are advantageous with respect to those known so far. In fact, they have an ecological character since they do not involve any use either of formaldehyde or low-boiling solvents, and are derived from renewable and widely available raw materials. The foam materials obtained from the composition and by the process of the invention exhibit good insulating properties and excellent mechanical resistance, together with characteristics of non-flammability, low environmental impact, and they can be produced at a low cost.

## Claims

1. Composition for manufacturing a foam material comprising flavonoid tannins, mainly of the prorobineditinidin and/or profisetinidin type, according to an amount comprised between 40% and 50% in weight of the composition, furfuryl alcohol according to an amount greater than 15% in weight of the composition, and an acid catalyst,
**characterized in that** the composition contains a water amount not greater than 15% in weight, and **in that** it includes a substance adapted to release a gas having the function of a foaming agent, such a substance being used according to an amount not greater than 10% in weight of the composition, the composition being completely free from formaldehyde and organic solvents having a low-boiling point in the range of 30-60°C.

2. Composition according to claim 1, **characterized in that** said substance adapted to release a gas having the function of a foaming agent is an isocyanate, which is used according to an amount smaller than 1% in weight of the composition.

3. Composition according to claim 2, **characterized in that** said isocyanate consists of methylene-diphenyldiisocyanate (MDI) or of polymeric-diphenylmethane-diisocyanate (PMDI), or of a combination thereof, and **in that** it allows carbon dioxide (CO₂) to be released during the polymerization step of the foam material, having the function of a foaming agent.

4. Composition according to any one of claims 1 to 3, **characterized in that** said catalyst is an acid such as p-toluensulfonic acid, phosphoric acid, or trichloroacetic acid.

5. Composition according to claim 4, **characterized in that** said acid catalyst is used in a solution corresponding to an amount smaller than 20% in weight of the composition.

6. Composition according to claim 5, **characterized in that** said solution is an aqueous solution in which the acid catalyst corresponds to about 65% in weight of the solution.

7. Composition according to claim 5, **characterized in that** the acid catalyst of said solution is dissolved in glycerin or in alcohols or poly-alcohols.

8. Composition according to any one of claims 1 to 7, **characterized in that** it contains additives such as emulsifying, dispersant, surfactant agents, and/or agents for increasing fire-resistance and for reducing self-extinction, and/or nanoparticles having a filler function, and/or polymerization agents, according to a total amount not greater than 10% in weight of the composition.

9. Composition according to claim 8, **characterized in that** said agents for increasing fire resistance and for reducing self-extinction, consist of boric acid and/or phosphoric acid or of derivatives thereof, or of a combination thereof.

10. Composition according to claim 8, **characterized in that** said polymerization agents consist of glyoxal, hexamine, acetaldehyde, propionaldehyde, butyraldehyde and/or furaldehyde, or of a combination thereof.

11. Organic tannin-based foam material, **characterized in that** it is obtained from a composition according to any one of claims 1 to 10.

12. Process for manufacturing a foam material by using a composition according any one of claims 1 to 10, **characterized in that** it comprises the steps of:
- providing a mold the shape of which corresponds to that of the product to be obtained,
- preparing a mixture containing dosed amounts of furfuryl alcohol, water and tannins,
- performing a first homogenization step,
- adding a substance adapted to release a gas having the function of a foaming agent to the mixture so obtained,
- performing a second homogenization step,
- adding an acid catalyst to the mixture,
- performing a third homogenization step,
- transferring the mixture into said mold.

13. Process according to claim 12, **characterized in that** said substance adapted to release a gas having the function of a foaming agent is an isocyanate, and **in that** said isocyanate is added according to an amount not greater than 1% in weight of the final mixture.

14. Process according to claim 13, **characterized in that** said isocyanate consists of methylene-diphenyldiisocyanate (MDI) or of polymeric-diphenylmethane-diisocyanate (PMDI), or of a combination thereof.

15. Process according to any one of claims 12 to 14, **characterized in that** it includes the step of adding dosed amounts of additives, such as emulsifying, dispersant, surfactant agents, and/or agents for increasing fire-resistance and for reducing self-extinction, and/or nanoparticles having a filler function, and/or polymerization agents, to the mixture containing furfuryl alcohol and water, before adding the tannins to the mixture.

16. Process according to any one of claims 12 to 15, **characterized in that** the acid catalyst consists of p-toluensulfonic acid (p-TSA), phosphoric acid, trichloroacetic acid or of a combination thereof, preferably in an aqueous solution or dissolved in glycerin, alcohols or polyalcohols.

## Patentansprüche

1. Zusammensetzung zur Herstellung eines Schaumstoffs, umfassend Flavonoid-Tannine, hauptsächlich des Prorobinditinidin- und/oder des Profisetinidin-Typs, in einer Menge zwischen 40 und 50 Gew.-%, bezogen auf das Gewicht der Zusammensetzung, Furfurylalkohol in einer Menge von mehr als 15 Gew.-% und einen Säurekatalysator,
**dadurch gekennzeichnet, dass** die Zusammensetzung eine Wassermenge von nicht mehr als 15 Gew.-% enthält und dass sie eine Substanz enthält, die dafür ausgelegt ist, ein Gas mit der Funktion eines Schäummittels freizusetzen, wobei eine solche Substanz in einer Menge von nicht mehr als 10 Gew.-%, bezogen auf das Gewicht der Zusammensetzung, verwendet wird, wobei die Zusammensetzung vollständig frei von Formaldehyd und organischen Lösungsmitteln mit einem niedrigen Siedepunkt im Bereich von 30-60°C ist.

2. Zusammensetzung nach Anspruch 1, **dadurch gekennzeichnet, dass** die Substanz, die dafür ausgelegt ist, ein Gas mit der Funktion eines Schäummittels freizusetzen, ein Isocyanat ist, das in einer Menge von weniger als 1 Gew.-%, bezogen auf das Gewicht der Zusammensetzung, verwendet wird.

3. Zusammensetzung nach Anspruch 2, **dadurch gekennzeichnet, dass** das Isocyanat aus Methylendiphenyldiisocyanat (MDI) oder aus polymerem Diphenylmethandiisocyanat (PMDI) oder aus einer Kombination davon besteht, und dadurch, dass es ermöglicht, dass Kohlendioxid (CO₂) während des Polymerisationsschritts des Schaumstoffs freigesetzt wird, das die Funktion eines Schäummittels hat.

4. Zusammensetzung nach einem der Ansprüche 1 bis 3, **dadurch gekennzeichnet, dass** der Katalysator eine Säure, wie p-Toluolsulfonsäure, Phosphorsäure oder Trichloressigsäure, ist.

5. Zusammensetzung nach Anspruch 4, **dadurch gekennzeichnet, dass** der Säurekatalysator in einer Lösung verwendet wird, die einer Menge von weniger als 20 Gew.-%, bezogen auf das Gewicht der Zusammensetzung, entspricht.

6. Zusammensetzung nach Anspruch 5, **dadurch gekennzeichnet, dass** die Lösung eine wässrige Lösung ist, in der der Säurekatalysator etwa 65 Gew.-%, bezogen auf das Gewicht der Lösung, entspricht.

7. Zusammensetzung nach Anspruch 5, **dadurch gekennzeichnet, dass** der Säurekatalysator der Lösung in Glycerin oder in Alkoholen oder Polyalkoholen gelöst ist.

8. Zusammensetzung nach einem der Ansprüche 1 bis 7, **dadurch gekennzeichnet, dass** sie Additive, wie Emulgier-, Dispersions-, oberflächenaktive Mittel und/oder Mittel zur Erhöhung der Feuerbeständigkeit und zur Verringerung der Selbstlöschung und/oder Nanopartikel mit einer Füllstofffunktion und/oder Polymerisationsmittel, in einer Gesamtmenge von nicht mehr als 10 Gew.-%, bezogen auf das Gewicht der Zusammensetzung, enthält.

9. Zusammensetzung nach Anspruch 8, **dadurch gekennzeichnet, dass** die Mittel zur Erhöhung der Feuerbeständigkeit und zur Verringerung der Selbstlöschung aus Borsäure und/oder Phosphorsäure oder aus deren Derivaten oder aus einer Kombination davon bestehen.

10. Zusammensetzung nach Anspruch 8, **dadurch gekennzeichnet, dass** die Polymerisationsmittel aus Glyoxal, Hexamin, Acetaldehyd, Propionaldehyd, Butyraldehyd und/oder Furaldehyd oder aus einer Kombination davon bestehen.

11. Organischer Schaumstoff auf Tannin-Basis, **dadurch gekennzeichnet, dass** er aus einer Zusammensetzung nach einem der Ansprüche 1 bis 10 erhalten wird.

12. Verfahren zur Herstellung eines Schaumstoffs unter Verwendung einer Zusammensetzung nach einem der Ansprüche 1 bis 10, **dadurch gekennzeichnet, dass** es die folgenden Schritte umfasst:
- Bereitstellen einer Form, deren Gestalt derjenigen des zu erhaltenden Produkts entspricht,
- Herstellen eines Gemischs, das dosierte Mengen an Furfurylalkohol, Wasser und Tanninen enthält,
- Durchführen eines ersten Homogenisierungsschritts,
- Zugeben einer Substanz, die dafür ausgelegt ist, ein Gas mit der Funktion eines Schäummittels freizusetzen, zu dem erhaltenen Gemisch,
- Durchführen eines zweiten Homogenisierungsschritts,
- Zugeben eines Säurekatalysators zu dem Gemisch,
- Durchführen eines dritten Homogenisierungsschritts,
- Überführen des Gemischs in die Form.

13. Verfahren nach Anspruch 12, **dadurch gekennzeichnet, dass** die Substanz, die dafür ausgelegt ist, ein Gas mit der Funktion eines Schäummittels freizusetzen, ein Isocyanat ist, und dadurch, dass das Isocyanat in einer Menge von nicht mehr als 1 Gew.-%, bezogen auf das Gewicht des endgültigen Gemischs, zugegeben wird.

14. Verfahren nach Anspruch 13, **dadurch gekennzeichnet, dass** das Isocyanat aus Methylendiphenyldiisocyanat (MDI) oder aus polymerem Diphenylmethandiisocyanat (PMDI) oder einer Kombination davon besteht.

15. Verfahren nach einem der Ansprüche 12 bis 14, **dadurch gekennzeichnet, dass** es den Schritt der Zugabe von dosierten Mengen an Additiven, wie Emulgier-, Dispersions-, oberflächenaktive Mittel und/oder Mittel zur Erhöhung der Feuerbeständigkeit und zur Verringerung der Selbstlöschung und/oder Nanopartikel mit einer Füllstofffunktion und/oder Polymerisationsmittel, zu dem Furfurylalkohol und Wasser enthaltenden Gemisch vor der Zugabe der Tannine zu dem Gemisch beinhaltet.

16. Verfahren nach einem der Ansprüche 12 bis 15, **dadurch gekennzeichnet, dass** der Säurekatalysator aus p-Toluolsulfonsäure (p-TSA), Phosphorsäure, Trichloressigsäure oder aus einer Kombination davon, vorzugsweise in einer wässrigen Lösung oder in Glycerin, Alkoholen oder Polyalkoholen gelöst, besteht.

## Revendications

1. Composition pour la fabrication d'un matériau en mousse comprenant des tanins flavonoïdes, principalement du type prorobineditinidine et / ou profisetinidine, selon une quantité comprise entre 40% et 50% en poids de la composition, de l'alcool furfurylique selon une quantité supérieure à 15% en poids du Composition, et un catalyseur acide, **caractérisée en ce que** la composition contient une quantité d'eau non supérieure à 15% en poids et **en ce qu'**elle comprend une substance apte à libérer un gaz ayant la fonction d'agent moussant, cette substance étant utilisée selon une quantité non supérieure à 10% en poids de la composition, la composition étant totalement dépourvue de formaldéhyde et de solvants organiques ayant un bas point d'ébullition dans l'intervalle allant de 30 à 60°C.

2. Composition selon la revendication 1, **caractérisée en ce que** ladite substance apte à libérer un gaz ayant la fonction d'agent moussant est un isocyanate, qui est utilisé selon une quantité inférieure à 1% en poids de la composition.

3. Composition selon la revendication 2, **caractérisée en ce que** ledit isocyanate est constitué d'isocyanate de méthylène-diphényldiisocyanate (MDI) ou de diphénylméthanediisocyanate polymère (PMDI), ou d'une combinaison de ceux-ci, et **en ce qu'**il permet le dégagement de dioxyde de carbone (CO₂) pendant l'étape de polymérisation du matériau en mousse, ayant la fonction d'agent moussant.

4. Composition selon l'une quelconque des revendications 1 à 3, **caractérisée en ce que** ledit catalyseur est un acide tel que l'acide p-toluènesulfonique, l'acide phosphorique ou l'acide trichloroacétique.

5. Composition selon la revendication 4, **caractérisée en ce que** ledit catalyseur acide est utilisé dans une solution correspondant à une quantité inférieure à 20% en poids de la composition.

6. Composition selon la revendication 5, **caractérisée en ce que** ladite solution est une solution aqueuse dans laquelle le catalyseur acide correspond à environ 65% en poids de la solution.

7. Composition selon la revendication 5, **caractérisée en ce que** le catalyseur acide de ladite solution est dissous dans de la glycérine ou dans des alcools ou des polyalcools.

8. Composition selon l'une quelconque des revendications 1 à 7, **caractérisée en ce qu'**elle contient des additifs tels que des agents émulsifiants, dispersants, tensioactifs et / ou des agents pour accroître la résistance au feu et pour réduire l'auto-extinction et / ou des nanoparticules ayant la fonction de charge, et / ou d'agents de polymérisation, selon une quantité totale non supérieure à 10% en poids de la composition.

9. Composition selon la revendication 8, **caractérisée en ce que** lesdits agents pour accroître la résistance au feu et pour réduire l'auto-extinction, sont constitués d'acide borique et / ou d'acide phosphorique ou de leurs dérivés, ou d'une combinaison de ceux-ci.

10. Composition selon la revendication 8, **caractérisée en ce que** lesdits agents de polymérisation consistent en du glyoxal, de l'hexamine, de l'acétaldéhyde, du propionaldéhyde, du butyraldéhyde et / ou du furaldéhyde, ou en une combinaison de ceux-ci.

11. Matériau moussé à base de tanin organique, **caractérisé en ce qu'**il est obtenu à partir d'une composition selon l'une quelconque des revendications 1 à 10.

12. Procédé de fabrication d'un matériau moussé en utilisant une composition selon l'une quelconque des revendications 1 à 10, **caractérisé en ce qu'**il comprend les étapes consistant à :
- utiliser un moule dont la forme correspond à celle du produit à obtenir,
- préparer un mélange contenant des quantités dosées d'alcool furfurylique, d'eau et de tanins,
- réaliser une première étape d'homogénéisation,
- ajouter au mélange ainsi obtenu une substance apte à libérer un gaz ayant la fonction d'agent moussant,
- réaliser une deuxième étape d'homogénéisation,
- ajouter un catalyseur acide au mélange,
- effectuer une troisième étape d'homogénéisation,
- transférer le mélange dans ledit moule.

13. Procédé selon la revendication 12, **caractérisé en ce que** ladite substance apte à libérer un gaz ayant la fonction d'agent moussant est un isocyanate, et **en ce que** ledit isocyanate est ajouté selon une quantité non supérieure à 1% en poids du mélange final.

14. Procédé selon la revendication 13, **caractérisé en ce que** ledit isocyanate est constitué de méthylène-diphényldiisocyanate (MDI) ou de diphénylméthanediisocyanate polymère (PMDI), ou d'une combinaison de ceux-ci.

15. Procédé selon l'une quelconque des revendications 12 à 14, **caractérisé en ce qu'**il comprend l'étape consistant à ajouter des quantités dosées d'additifs tels que des agents émulsifiants, dispersants, tensioactifs et / ou agents pour accroître la résistance au feu et pour réduire l'auto-extinction, et / ou des nanoparticules ayant une fonction de charge, et / ou des agents de polymérisation, au mélange contenant de l'alcool furfurylique et de l'eau, avant d'ajouter les tanins au mélange.

16. Procédé selon l'une quelconque des revendications 12 à 15, **caractérisé en ce que** le catalyseur acide est constitué d'acide p-toluensulfonique (p-TSA), d'acide phosphorique, d'acide trichloracétique ou d'une combinaison de ceux-ci, de préférence en solution aqueuse ou dissous dans de la glycérine, des alcools ou des polyalcools.
